# EUROPEAN PATENT SPECIFICATION

(11) **EP 1 709 120 B1**
(45) Date of publication and mention of the grant of the patent: **17.09.2008**
(21) Application number: 05704597.3
(22) Date of filing: 28.01.2005
(51) Int. Cl.: C08L 67/00

(54) **HALOGEN-FREE FLAME-RETARDED POLYESTER COMPOSITION**
HALOGENFREIE FLAMMGESCHÜTZTE POLYESTERZUSAMMENSETZUNG
COMPOSITION POLYESTER ININFLAMMABLE EXEMPTE D'HALOGENE

(30) Priority: 30.01.2004 EP 04075281
(43) Date of publication of application: 11.10.2006
(73) Proprietor: DSM IP Assets B.V., 6411 TE Heerlen (NL)
(72) Inventor: JANSSEN, Robert, Hendrik, Catharina, NL-6181 BL Elsloo (NL)
(74) Representative: van der Ploeg, Antonius Franciscus M.J.
(86) International application number: PCT/NL2005/000067
(87) International publication number: WO 2005/073316

(56) References cited:
- EP-A- 0 791 634
- US-A1- 2003 083 408

## Description

The invention relates to a halogen-free flame-retarded polyester composition, more specifically to such composition comprising melamine cyanurate as flame-retardant additive. The invention also relates to a moulded part for use in electrical or electronic applications comprising said polyester composition.

Polyester compositions, more specifically thermoplastic polyester compositions, are often used in applications that have non-flammability properties as a critical requirement. Typical examples are parts for use in various electrical or electronic appliances, like housings, bobbins, switches and connectors. Depending on the specific application, the polyester composition should fulfil various requirements regarding desired mechanical and electrical properties of parts moulded therefrom. In many of these applications the polyester compositions should be classified as V-1 or more preferably as V-0 in the flame retardancy test according to Underwriter's Laboratories Standard 94 vertical (UL-94 V test), which is one of the most stringent requirements. For use in for example connectors or bases for energy-saving lamps, which often are rather thin walled, the polyester composition should for example display sufficiently high stiffness and strength and yet have enough ductility, have good stability during moulding and good melt flow behaviour to ensure complete mould filling at short cycle times. The moulded part should also show a.o. good dimensional and heat stability, e.g. during use at higher temperatures. In order to comply with all these different requirements a polyester composition generally contains a series of components, like flame-retardant compounds, anti-dripping agents, flow promoters, reinforcing agents, impact-modifiers, release agents, stabilizers, colorants, and laser-marking additives.

A complicating factor is that halogenated, especially brominated flame-retardants should not be used anymore in view of their environmental effects, and legislative developments. Especially for polyester compositions it appears very difficult to find alternative halogen-free flame-retardant systems.

Halogen-free flame-retarded polyester compositions comprising melamine cyanurate as flame-retardant additive have been described in numerous publications. Melamine cyanurate is the name commonly used for the 1:1 adduct of melamine (2,4,6-triamino-1,3,5-triazine) and cyanuric acid (2,4,6-trihydroxy-1,3,5-triazine) or its tautomer.

Such a halogen-free flame-retarded polyester composition is known from for example EP 0899296 A2. In this patent application a poly(butylene terephthalate) (PBT) composition comprising 30% melamine cyanurate is disclosed, which shows a V-2 rating in the UL-94 test at 1.6 mm sample thickness. A V-0 rating in said test is reported for a PBT composition comprising 5% melamine cyanurate and 10% of the aluminium salt of 1-hydroxy-3-methyl-1H-phospholane-1-oxide.

In US 4,180,496 PBT compositions comprising 20 and 30 mass % melamine cyanurate are disclosed that would show improved flame-proofing, but UL-94 classification is not given. It is furthermore indicated that higher levels of melamine cyanurate in a polyester polymer would be disadvantageous for its properties.

Many later publications report improvement of flame-retardancy and mechanical properties of polyester compositions comprising up to about 20 mass % melamine cyanurate, in most cases in combination with a further auxiliary flame-retardant component and a reinforcing agent like glass fibres. JP 3-281652 A, for example, discloses polyester compositions comprising melamine cyanurate and a phosphate or phosphonate compound as flame-retardant combination, and fillers. In JP 6-157880 reinforced poly(alkylene terephthalate) compositions comprising melamine cyanurate and a P-containing compound are described. EP 1024167 A1 discloses glass-fibre reinforced PBT compositions with melamine cyanurate and an aluminium- or zinc phosphinate. In both WO 01/81470 A1 and WO 03/002643 A1 flame-retarded polyester compositions are disclosed that contain melamine cyanurate, a zinc and/or boron compound, and a phosphorous-containing compound as flame-retardant system.

JP-A-2000319491 / JP-A-2000319492 describe flame retardant polyester resin compositions comprising 95-30 parts by weight (pbw) of a polyester resin and 5.0-70 pbw of a polycarbonate resin, the total of polyester and PPE and/or PPS being 100 pbw, 1-30 pbw red phosphorous, and 0.01-50 pbw of a porous material. Preferred compositions further comprise 1-50 pbw mecy and/or 0.1-5 pbw of PTFE anti-dripping agent. An amount of at least 0.1 pbw PTFE is needed to prevent dripping. A minimum of 1 pbw red phosphorous is required for satisfactory flame retardancy. Red phosphorous is poor in thermal stability, and makes the final product reddish, so that this composition is also still unsatisfactory from the practical point of view.

EP-A-0791634 describes halogen free flame retardant polyester resin compositions comprising 95-30 parts by weight (pbw) of a polyester resin and 5.0-70 pbw of a PPE or PPS resin, together being 100 pbw, and 2-45 parts by weight of a phosphoric ester compound or phosphonitrile compound (P-flame retardant) and 0-45 parts by weight of a melamine cyanurate. The compounds of EP-A-0791634 are said to preferably comprise an anti-dripping agent (F), preferably fluorine-containing polymers such as PTFE, when good fire retardancy of the composition is considered. These compositions are said to scarcely corrode metals. Mostly all examples relate to glass reinforced compositions with 15-30 pbw melamine cyanurate, 15-30 pbw P-flame retardant and 60 pbw glass fibres, and at least 20 pbw PPE or PPS. In one comparative experiment no P-flame retardant was used. This composition, which contained 60 pbw PPE, 30 pbw mecy and 60 pbw glass fibres, considerably deteriorated in fire retardancy and mechanical properties. In another comparative example 60 pbw mecy was used. This composition, which further contained 20 pbw of PPE, 60 pbw of P-flame retardant and 60 pbw glass fibres, considerably deteriorated in resistance to hydrolysis, and showed greatly increased resistance to mold release. In addition plate out was observed. For reasons of problems with toughness, ductility, bleed -out and plate melamine cyanurate should not be used in an amount of more than 45 pbw, relative to 100 pbw polymer.

In the even more recent patent application US-A-2003/0083408 several further patent publications concerning flame retardant polyester compositions are mentioned. All these patent publications disclose combinations of mecy or melamine based and phosphorous based flame retardants. According to US-A-2003/0083408 there is still a need for polyester molding compositions which are distinguished by an improved combination of good mechanical properties and flame retardant properties, good corrosion behaviour, good electrical properties and good stability to hot air ageing. In US-A-2003/0083408 this has been solved with a molding composition comprising 10-40 wt. % of flame retardant composition containing a nitrogen compound and a phosphorous compound and 0.01 to 5 wt.% zinc sulphide. As nitrogen compound melamine cyanurate and as phosphorous compound bisphenol A diphosphates are preferred. In the examples these components are each used in an amount of about 8-10 wt.%.

The known compositions still show some disadvantages, in that for example processing behaviour is troublesome, colour or colour stability is unsatisfactory, or thermal or hydrolysis resistance is reduced, for example by P-containing compounds. In most instances, the disclosed compositions cannot be classified V-0 in the UL-94 test. Another disadvantage is that the E&E industry is becoming more critical on the retention of properties after long term heat ageing, often expresses by the RTI (Relative Temperature Index). Furthermore, some additional compounds significantly add to the cost-prize of the composition.

There is thus still a need in industry for a halogen-free flame-retarded polyester composition that combines non-flammability (preferably UL-94 V-0 classification) with sufficiently high stiffness, good moulding behaviour, good thermal behaviour with regard to retention of mechanical properties after heat ageing and a low cost-prize.

The aim of the invention is therefore to provide a further halogen-free flame-retarded polyester composition that combines non-flammability (with at least UL-94-V-1 and preferably UL-94 V-0 classification) with good moulding behaviour, sufficiently high stiffness, improved thermal behaviour compared to known compositions containing melamine and phosphorous based flame retardants and a low cost-prize.

This aim has been achieved with the halogen-free flame-retarded polyester composition according to the present invention, which consists of:
(A) a polymer composition consisting of
   a) 30-67 mass % of at least one thermoplastic polyester polymer and
   b) 0-15 mass % other polymers, of which 0 - 0.3 mass % of a fluorine polymer,
(B) a flame retardant system consisting of
   a) 33-55 mass % melamine cyanurate,
   b) 0 to less than 2 mass % of a phosphorous containing flame retardant not comprising elementary phosphorous, and
   c) 0-5 mass % of an inorganic flame retardant synergist not comprising phosphorous, and
(C) 0-10 mass % other additives, of which 0-5 mass % fibrous reinforcing agents,
and wherein the sum of components (A)-(C) totals 100 mass % and all the mass percentages are relative to the total mass of the composition.

It is noted here that where further herein there is mentioned a mass %, the mass % always relate to the total mass of the composition, unless specified otherwise.

The polyester composition according to the invention fulfils the UL-94 V-1 or even V-0 requirements at 1.6 mm, despite the presence of melamine cyanurate as substantially the sole flame retardant, shows good moulding behaviour despite the high melamine cyanurate content, a higher stiffness without using glass fibres or only in low amounts, relatively low density, a light natural hue and good colourability and improved stability against hot air ageing compared to the known compositions comprising melamine cyanurate and phosphorous based flame retardants. Moreover, in contrast to the surprising results with the inventive compositions UL-94 V-1 and V-0 ratings were not obtained for corresponding compositions comprising a PTFE dripping agent in an amount generally used and advised to obtain thermoplastic polyester compositions with improved flame retardancy properties.

The said properties make the composition according to the invention suited for making parts for use in electrical or electronic applications, like for example lamp bases of energy-saving lamps. Such parts release no or very little hazardous fumes and smoke when exposed to fire, for example a low amount of carbon monoxide.

The at least one thermoplastic polyester polymer (component A-a) in the polyester composition according to the invention generally forms a continuous phase of the composition, and is preferably a semi-crystalline polyester. Said polyester is generally derived from at least one aromatic dicarboxylic acid or an ester-forming derivative thereof and at least one (cyclo)aliphatic or aromatic diol, and includes homo- as well as copolymers. Examples of suitable aromatic diacids include terephthalic acid, isophthalic acid, naphthalene dicarboxylic acid, biphenyl dicarboxylic acid, etc., with terephthalic acid being preferred. Suitable diols include for example alkylene diols, hydroquinone, dihydroxyphenyl, naphthalenediol. Alkylene diols, like ethylene diol, propylene diol, 1,4-butylene diol or butane diol, neopentylene diol, and cyclohexane dimethanol are preferred. A special class is formed by polyesters containing long chain diols, like poly(alkylene oxide) diols, aliphatic polyester diols or aliphatic polycarbonate diols in addition to other said diols. This last group of polyesters, including so-called polyether esters and polyester esters, is also referred to as segmented blockcopolyesters. Depending on the amount of long chain diol in such polyester, the material can be a stiff but tough plastic or flexible thermoplastic elastomer. The polyester may further comprise a small amount of a branching component, i.e. a compound containing three or more ester-forming groups, to affect melt rheology. Said polyesters and their preparation are for example described in 'Encyclopedia of polymer science and technology', Vol. 12, John Wiley &Sons, New York, 1988 (ISBN 0-471-80944-6).

In a preferred embodiment the thermoplastic polyester is a poly(alkylene terephthalate), like poly(ethylene terephthalate) (PET), poly(1,4-butylene terephthalate) or simply called poly(butylene terephthalate) (PBT), poly(propylene terephthalate) (PTT), poly(cyclohexane terephthalate) (PCT), or copolymers thereof with a minority content of another dicarboxylic acid or diol. Preferably, the content of other monomers in these polyesters is below 30, below 20, more preferably below 10 mol% to ensure semi-crystalline properties. Also blends of different types or grades of poly(alkylene terephthalates) can be used. These polyester compositions are very suited for use as moulding compositions, especially as injection-moulding compositions.

In a special embodiment according to the invention the composition contains a poly(butylene terephthalate) as the polyester. Advantages thereof include easy processing during compounding and injection-moulding, while moulded parts still have sufficient thermal resistance. The relatively low processing temperatures of PBT allow a broader choice of additives, and help to prevent excessive degradation. The composition may also contain another polyester, e.g. PET, in minority content. Such a PBT/PET polyester blend has advantages regarding processing, and results in moulded parts with better surface appearance.

In another special embodiment according to the invention the composition contains a poly(butylene terephthalate) containing long chain diols as the polyester. Advantages thereof include easy processing during compounding and injection-moulding, and a relatively high toughness, e.g. elongation at break of the composition and parts moulded therefrom. The amount of long chain diol is such that the PBT blockcopolyester has a hardness in the range of about 25-75 Shore D; preferably about 35-70 Shore D.

Specifically preferred is a composition containing poly(butylene terephthalate) having a relative solution viscosity of 1.7-2.5, or 1.8-2.2 (as measured on a 1 mass % solution in m-cresol at 25°C). The advantage thereof is favourable melt-flow behaviour of the polyester composition, and sufficient mechanical properties, e.g. stiffness and toughness, to make thin-walled structural parts.

Also preferably, the polyester polymer (A-a) consists of a poly(butylene terephthalate), a poly(ethylene terephthalate) or a copolymer or a blend thereof. More preferably, the polymer composition (A) consists of a poly(butylene terephthalate) or a blend of poly(butylene terephthalate) and poly(ethylene terephthalate) in a ratio of at least 70/30 m/m, more preferably poly(butylene terephthalate) or a blend of poly(butylene terephthalate) and poly(ethylene terephthalate) in a ratio of at least 85/15, and still more preferably only poly(butylene terephthalate).

The composition according to the invention may further contain 0-15 mass % other polymers (component A-b), i.e. polymers other than the thermoplastic polyester polymer (component A-a). The other polymers can be polymers like amorphous polymers and/or impact-modifiers. Suitable amorphous polymers include styrenic and acrylic polymers, polycarbonates, especially aromatic polycarbonates, and mixtures or copolymers thereof. The amorphous polymer preferably has a glass transition temperature (T_{g}) higher than the T_{g} of the polyester polymer. Preferred polymers include thermoplastic polymers of styrene, alpha-methylstyrene, methyl acrylate, methylmethacrylate, acrylonitrile, methacrylonitrile, maleic acid anhydride, N-substituted maleimide, vinyl acetate, or mixtures thereof. Preferred polycarbonates are aromatic polycarbonates prepared from a dihydric phenol and a carbonate precursor, including copolymers like polyester carbonates. Most preferred is the polycarbonate derived from bisphenol A and its copolymers, generally simply called polycarbonate. As impact-modifier generally rubbery materials are used, preferably consisting of or comprising functionalized copolymers that are compatible with or reactive towards the polyester and having a T_{g} below ambient temperature, preferably below 0, -20 or even below -40°C. Suitable examples include styrenic, olefinic or (meth)acrylic copolymers with acid, acid anhydride-, or epoxy functional groups, like a copolymer of ethylene, methylmethacrylate and glycidyl methacrylate or a maleicanhydride-functionalized copolymer of ethylene and propylene. Also suitable are acrylonitrile butadiene styrene copolymers (ABS), styrene butadiene styrene copolymers (SBS) or hydrogenated versions thereof (SEBS), methacrylate butadiene styrene (MBS), or core-shell polymers having an acrylate rubber core and a shell comprising a vinyl aromatic compound and/or a vinyl cyanide and/or an alkyl(meth)acrylate. An effective amount of impact-modifying polymer is generally about 5-20 parts per 100 parts of PBT; that is the composition preferably comprises about 2-10 mass % of said other polymers.

The other polymers (A-b) in the inventive composition optionally comprise a fluorine polymer. The other polymers comprise no other halogen containing polymer. Chlorine and bromine containing polymers, for example, brominated polystyrene and brominated phenolic resins, are widely used, as such and in combination with flame retardant synergists, as flame retardants in halogenated flame retardant polymer compositions. Since the invention relates to a halogen free flame retardant polymer composition it is implicit that the other polymers (A-b) do not contain a chlorine or bromine containing polymer. Though fluorine is a halogen, fluorine polymers are generally not considered in the denomination of a flame retarded composition as being either halogen free or halogen containing flame retarded composition, even despite the fact that fluorine polymers can act as an antidripping agent. Therefore, the inventive composition is to be considered to be a halogen free flame retardant polymer composition, since it does not comprise a chlorine or bromine containing flame retardant. This is not changed by the small amount of fluorine polymer that might be part of component (A-b).

During evaluation of flammability behaviour according to the UL-94 test, dripping of molten polyester composition during flaming may prevent a V-1 or V-0 classification. To prevent dripping, typically 1-1.5 up to 2 mass % of fibrillating polytetrafluoroethylene (PTFE) is generally added in the art as anti-dripping agent to a flame-retarded composition. Surprisingly, it was found that upon adding PTFE in an amount of 0.5 mass % or higher, the polyester composition comprising mecy as the substantially sole flame retardant did not classify as V-0 or even not V-1 anymore, whereas if the amount of PTFE was reduced the results in the UL-94-V tests greatly improved. The inventive composition therefore should comprise less than 0.5 mass % of a fluorine polymer, preferably less than 0.2 mass % of a fluorine polymer. Most preferably, the inventive composition does not include PTFE and the like; and the composition according to the invention is preferably substantially free of fluorine polymers like polytetrafluoroethylene; in other words the other polymer (A-b) is free of halogen containing polymer making the inventive composition truly halogen-free (except perhaps for some traces or minor amounts present in other additives).

The composition according to the invention contains a flame retardant system (B) with 33-55 mass % melamine cyanurate as the main flame-retardant additive (component B-a).

Melamine cyanurate is the name commonly used for adducts or salts of melamine (2,4,6-triamino-1,3,5-triazine) and (iso)cyanuric acid (2,4,6-trihydroxy-1,3,5-triazine or its tautomer), as described in for example US 4,180,496. Lower amounts of melamine cyanurate appeared not to result in the desired V-0 classification, whereas still higher amounts only reduce mechanical properties and processability of the composition. The melamine cyanurate is preferable of small particle size, or can be easily dispersed into small particles in a polyester continuous phase during mixing. Suitable melamine cyanurate has a particle size distribution with 50% of the particles (d50) smaller than about 50 micrometer (µm), preferably particle size is below 25, below 10, or even below 5 µm.

Also suitably, the melamine cyanurate comprises a limited amount of particles with a large particle size. Preferably, the melamine cyanurate has a particle size distribution with 99% of the particles (d99) smaller than about 50 micrometer (µm), preferably particle size is below 25, below 10, or even below 5 µm. The smaller the d99, the better the mechanical properties of the composition are. The particle size distribution and the d50 and d99 can be measured with sieves methods and is determined with the method according to ASTM standard D1921-89, method A. The melamine cyanurate particles may have been provided with an organic or inorganic coating, to improve its performance, for example dosing behaviour, or dispersibility.

Preferably, the inventive composition comprises 35 - 50 mass % melamine cyanurate, relative to the total of the sum of components (A) - (C), i.e. relative to the total mass of the composition. More preferably, the composition comprises 37-45, or even 38-42 mass % of melamine cyanurate. A higher minimum amount of of melamine cyanurate has the advantage that the inventive composition performs even better in the UL 94-V test. As will be clear from the fact the total of the sum of components (A) - (C), amounts to 100%, the consequence of at least 35 mass % melamine cyanurate is that said preferred composition comprises at most 65 mass % of the polymer composition (A).

In contrast to many compositions described in the art, the composition according to the invention is substantially free from phosphor-containing compounds as flame-retardant additive. Besides melamine cyanurate the composition may comprise 0 to less than 2 mass % of a phosphorous containing flame retardant (component B-b) and 0-5 mass % of an inorganic flame retardant synergist not comprising phosphorous (component B-c).

The inventive composition preferably comprises less than 1 mass %, more preferably less than 0.5 mass % of a phosphorous containing flame retardant (component B-b). Most preferably, the inventive composition does not comprise a phosphorous flame retardant at all.

Apart from the melamine cyanurate and the small amount of the phosphorous flame retardant the inventive composition may comprise a small amount up to and including 5 mass % of an inorganic flame retardant synergist (component B-c) to further improve the flame retardant properties. The inorganic flame retardant synergist shall not comprise phosphorous, neither in elementary form or in another form. Suitable inorganic flame retardant synergists are, for example, zinc oxides and metal borates.

The inorganic flame retardant synergist (component B-c) may be present in an amount as low as 0-3 mass % or 0-2 mass % and in a special embodiment, may be even completely absent.

In a preferred embodiment of the invention, the flame retardant system (B) consists of melamine cyanurate (i.e. mecy is the sole flame-retardant additive).

The composition according to the invention may further contain 0-10 mass % of other additives (component C). Examples of additives include inorganic fillers, plasticisers, processing aids, stabilizers, anti-oxidants, agents that improve electrical properties, dispersing aids, colorants, laser-marking additives, etc..

The inventive composition may for example comprise a small amount of up to and including 5 mass % fibrous reinforcing agents like glass fibers. In particular higher amounts of glass fibers were found to serious deteriorate the flame retardancy behaviour thereby preventing V-0 and even V-1 ratings. Preferably, the inventive composition comprises 0-3 mass %, more preferably 0-2 mass % of fibrous reinforcing agents. Most preferably, the composition according to the invention does not contain fibrous reinforcing agents like glass fibers at all, since thus the best flame retardancy results were obtained. Fibrous reinforcing agents are herein understood to mean elongate particles having a length much greater than its dimensions in transverse directions and having an aspect ratio, that is the ratio of length to thickness, of at least 10.

In order to obtain a polyester composition with desirable combinations of strength, stiffness, elongation at break and impact resistance values, the composition may comprise other polymers (component A-b), and/or inorganic filler materials, for example inorganic fillers like glass beads, silica, (calcined) clay, mica, talc, kaolin, wollastonite, metal oxides, etc.. These filler materials can have various forms, including globular, platelet or needle-like shapes. If the filler is needle-like or fibrous, its aspect ratio is preferably below 10, or below 8.

Processing aids include e.g. mould-release agents, lubricants, nucleating agents, and flow-promoters. Stabilizers for example include thermo-oxidative stabilizers like hindered phenolic compounds, hydrolysis stabilizers, such as acid scavengers like carbodiimides and epoxy compounds, and UV-stabilizers. Other stabilizers include phosphorous containing stabilizers.

Although the composition may comprise minor amounts of P-containing compounds as for example a stabilizer, as well as a small amount of a phosphorous containing flame retardant, if any, the composition according to the invention is substantially free from phosphor; preferably the P-content is below 0,4, more preferably below 0.25, 0.1, or 0.05, or even below 0.02 mass%. In a special embodiment of the invention, the inventive composition comprises no phosphorous at all, i.e. it is absolutely phosphorous free.

Apolar polymers like polyolefines (as part of component A-b), and inert fillers like bariumsulphate may be added to improve for example the comparative tracking index or other electrical properties of the composition. The type and amount of colorants like inorganic pigments and organic pigments or dyes is chosen such that it does not deteriorate other properties. Inorganic filler, metal oxides, or other colorants may also be present to improve contrast upon irradiation with a laser-beam.

In a highly preferred embodiment, the compositions according to the invention consists of: Composition according to any one of claims 1-5, wherein the composition consists of:
(A) a polymer composition consisting of a
   a) 30-65 mass % of at least one thermoplastic polyester polymer and
   b) 0-15 mass % other polymers, not containing a halogen containing polymer,
(B) a flame retardant system consisting of
   a. 35-50 mass % melamine cyanurate, and
   b. 0-3 mass % of an inorganic flame retardant synergist not comprising phosphorous, and
(C) 0-10 mass % other additives, not comprising fibrous reinforcing agents, and wherein the sum of components (A)-(C) totals 100 mass % and all the mass percentages are relative to the total mass of the composition.

The polyester composition according to the invention can be prepared in any customary manner by blending the various components in a suitable mixing device. Preferred devices are extruders, especially twin-screw extruders, most preferably with co-rotating screws. In a preferred method, the polyester and other polymers are dosed to the first feed port and melamine cyanurate, optionally pre-blended with other additives, downstream. The advantage thereof is better control over the maximum temperature during compounding, and better dispersing of components into the polyester.

In a special embodiment, the composition is subjected to a heat-treatment after mixing or compounding, preferably at a temperature close to but below the melting point of the polyester polymer, and under reduced pressure or a flow of an inert gas. This heat-treatment will increase the molar mass and the relative viscosity of the polyester in the composition (also referred to as solid-state postcondensation), and improve mechanical properties of the composition.

The invention also relates to a moulded part for use in electrical or electronic applications, which part comprises the polyester composition according to the invention. Preferably such a part is made via injection moulding techniques.

The invention also provides an article, like an electrical or electronic appliance, comprising a part moulded from a polyester composition according to the invention. A typical example is an energy saving lamp comprising a lamp base made from the polyester composition according to the invention.

The invention will now be further illustrated by means of the following examples and comparative experiments.

### Example I

As starting components following materials were applied:
- PBT polymer with relative solution viscosity (RSV) of 1.98 (as measured on 1 mass % solution in m-cresol at 25°C, based on ISO 307); and 52 meq/kg of carboxylic end-groups (Ec);
- Melapur^{®} MC XL, a compacted melamine cyanurate, available from Ciba Specialty Chemicals;
- Pentaerythritol tetrastearate (Radia^{®} 7176) mould release agent (at 0.25 mass % of total composition).

The composition was prepared on a Berstorff ZE25 twin-screw extruder. Barrel temperatures were set at room temperature for the first 6 zones, and at 270°C for zones 7-11 and die head. Throughput was about 30 kg/h, and screw-speed 350 rpm. PBT pellets were dosed to zone 1, a powdery mixture of melamine cyanurate and mould release agent was dosed via a side-feeder to zone 5. Vacuum degassing was applied on zone 10. A single extruded strand was cooled in water and granulated. Observed temperature of the melt was 315°C at maximum.

Test specimen were injection moulded from granulate, pre-dried during 10 hrs at 120°C to a water content below 0.02 mass%, on an Engel 80A machine, with standard temperature settings for PBT. Standard test bars were made in accordance with UL-94, ISO 527, or ISO 179.

Flammability behaviour was tested according to the UL-94 vertical burning test, using test bars of 1.6 mm thickness. Before testing samples were conditioned at 23°C, 50% RH for 48 hours; or aged at 70°C during 168 hrs.

Tensile properties were measured according to ISO 527/1A. Charpy impact was tested according to ISO 179/1eU. HDT-A was determined according to ISO 75/A at 1.8 MPa.

### Examples II and III.

Analogously to Ex. I compositions were made from PBT polymer with RSV of 1.85 and 2.10, and Ec of 32 and 21 meq/kg, respectively.

Compositions and results are collected in Table 1.

All 3 samples could be compounded and processed without difficulties into off-white test bars (typical values for L*, a* and b* are in the ranges 89-91, 0.8-1.2, and 10-11, respectively), and show a V-0 classification for both series of samples (conditioned at 23° and 70°C). The PBT polymer shows some loss in molar mass after compounding, but no increase in carboxylic acid end-groups. The materials show higher stiffness than plain PBT, and although strength and toughness are relatively low, the materials are suited for making thin-walled parts having flame-retardancy and sufficient dimensional strength and stability. A higher molar mass of PBT results in a tougher composition.

### Comparative experiments A-G

In these experiments the melamine cyanurate content of the composition was lowered, or some glass fibres (as chopped glass fibres with sizing agent suitable for polyesters), and/or a small amount of PTFE (Dyneon TF1654) was added. During sample preparation the PTFE was together with other components dosed at zone 5, whereas glass fibres were dosed downstream onto the melt at zone 8. Other conditions and evaluations were analogous to Examples I-III; except for samples E and F wherein throughput was lowered such that the temperature of the melt remained below about 315°C.

The test results for Examples I-III and Comparative Experiments A-G have been collected in Table 1.

**Table 1**

| *experiment* | | 1 | 2 | 3 | A | B | C | D | E | F | G |
|---|---|---|---|---|---|---|---|---|---|---|---|
| *composition* | | | | | | | | | | | |
| PBT/melamine cyanurate | mass ratio | 6/4 | 6/4 | 6/4 | 7/3 | 7/3 | 6/4 | 6/4 | 6/4 | 6/4 | 7/3 |
| glass fibres | mass% | 0 | 0 | 0 | 0 | 0 | 0 | 7.5 | 7.5 | 15 | 7.5 |
| PTFE | mass% | 0 | 0 | 0 | 0 | 1 | 0.5 | 0 | 1.0 | 0.5 | 0.5 |
| *properties* | | | | | | | | | | | |
| RSV | | 1.82 | 1.72 | 1.89 | 1.87 | 1.81 | 1.78 | 1.75 | 1.72 | 1.71 | 1.80 |
| Ec | meq/kg | 51.1 | 26.6 | 23.9 | 50.7 | 51.4 | 52.7 | 51.1 | 54.1 | 52.2 | 52.3 |
| UL-94 V @ 1.6 mm | class | V-0 | V-0 | V-0 | V-2 | NC | NC | NC | NC | NC | NC |
| Tensile modulus | MPa | 5080 | 5037 | 4820 | 4327 | 4843 | 5254 | 6943 | 7384 | 9503 | 6543 |
| Tensile strength | MPa | 29.7 | 25.5 | 31.6 | 36.1 | 40.1 | 31.3 | 45.2 | 46.2 | 61.9 | 57.7 |
| Elongation at break | % | 0.6 | 0.5 | 0.7 | 1.0 | 1.0 | 0.7 | 0.8 | 0.7 | 0.8 | 1.2 |
| Charpy impact | kJ/m² | 6.2 | 4.7 | 6.2 | 9.0 | 11.9 | 7.1 | 8.7 | 10.3 | 14.1 | 15.5 |
| HDT-A | °C | 134 | 143 | 130 | 128 | 118 | 130 | 198 | 199 | 210 | 199 |

From the data collected in Table 1 it can be seen that lowering the melamine cyanurate content to 30 mass %results in a V-2 classification (dripping, ignition of cotton). Addition of some PTFE, known as anti-dripping additive, did not improve flammability behaviour, but in contrast results in NC classification; even for a 40% melamine cyanurate composition. PTFE did not affect other properties. Addition of 7.5 or 15 mass %glass fibres resulted in compositions with higher mechanical properties, but with UL-94 NC classification.

### Example IV

For the composition of Example IV, Example III was repeated.

### Comparative Experiment H

In this experiments the melamine cyanurate content of the composition was lowered, and replaced in part by Diethylephosphinate Zinc (DEPZn, Exolit OP950 ex Clariant), and glass fibres (as chopped glass fibres with sizing agent suitable for polyesters) were added. The other components were dosed at zone 5, whereas glass fibres were dosed downstream onto the melt at zone 8. Other conditions and evaluations were analogous to Examples I-III; except that the throughput was lowered such that the temperature of the melt remained below about 315°C.

A series of standard test bars was made for Example IV and Comparative Experiment H as described for Example I. The mechanical properties were measured before and after heat ageing for 3 weeks at 150°C. The results have been summarized in Table 2.

**Table 2. Mechanical properties before and after heat ageing for 3 weeks at 150°C**

| | Example IV | | | Comparative Experiment H | | |
|---|---|---|---|---|---|---|
| Composition (parts by weight) | | | | | | |
| PBT | 60 | | | 45 | | |
| Mecy | 40 | | | 12.5 | | |
| DEPZn | | | | 12.5 | | |
| Glass fibres | | | | 30 | | |
| Mechanical Properties | Initial | After ageing | Change (%) | Initial | After ageing | Change (%) |
| E'-Modules (MPa) | 4823 | 4890 | +1.39 | 11450 | 11150 | -2.6 |
| Tensile Strength (MPa) | 35,1 | 37 | +5.4 | 107 | 89 | -16.8 |
| Elongation at break (%) | 0,82 | 0,87 | +6.1 | 1,85 | 1,25 | -32.4 |

As can be seen from Table 2, the mechanical properties of Example IV, i.e. the composition according to the invention are retained, in fact the properties have been improved after ageing. By contrast, Comparative Experiment H, i.e. the composition according to the prior art, shows a significant reduction in mechanical properties. Whereas Comparative Experiment H initially has much better mechanical properties than Example IV, which difference is directly attributable to the glass fibre reinforcement present in Comparative Experiment H, due to the ageing effect the mechanical properties and in particular the elongation of Comparative Experiment H fall much closer to those of Example IV. This makes the compositions according to the invention very suited for applications wherein flame retardant thermoplastic compositions are subjected to long term heat ageing and wherein long term properties are as important or even more important than the initial properties.

## Claims

1. Halogen free flame-retarded thermoplastic moulding composition consisting of:
(A) a polymer composition consisting of a
c) 30-67 mass % of at least one thermoplastic polyester polymer and
d) 0-15 mass % other polymers, of which 0-0.3 mass % of a fluorine polymer,
(B) a flame retardant system consisting of
a) 33-55 mass % melamine cyanurate,
b) 0 to less than 2 mass % of a phosphorous containing flame retardant not comprising elementary phosphorous, and
c) 0-5 mass % of an inorganic flame retardant synergist not comprising phosphorous, and
(C) 0-10 mass % other additives, of which 0-5 mass % fibrous reinforcing agents,
and wherein the sum of components (A)-(C) totals 100 mass % and all the mass percentages are relative to the total mass of the composition.

2. Composition according to claim 1, wherein the thermoplastic polyester is a poly(alkylene terephthalate).

3. Composition according to claim 1 or 2, wherein the polymer composition consists of poly(butylene terephthalate) or poly(ethylene terephthalate), or a mixture or copolymer thereof, preferably is poly(butylene terephthalate).

4. Composition according to any of claims 1-3, wherein the composition is substantially free of fluorine polymers.

5. Composition according to any of claims 1-4, wherein the other polymer (A-b) is a rubbery impact modifier.

6. Composition according to any of claims 1-5, wherein the composition comprises 37-45 mass % melamine cyanurate, relative to the total mass of the composition.

7. Composition according to any one of claims 1-6, wherein the flame retardant system contains less than 1 mass %, relative to the total of the sum of components (A) - (C), of the phosphorous containing flame retardant (B-b).

8. Composition according to any one of claims 1-7, wherein melamine cyanurate is the sole flame retardant additive.

9. Composition according to any one of claims 1-8, wherein the composition is free of fibrous reinforcing agents.

10. Composition according to any one of claims 1-9, wherein the composition has a P-content of below 0.25 mass % relative to the total mass of the moulding composition.

11. Composition according to any one of claims 1-10, wherein the composition consists of:
(B) a polymer composition consisting of
a) 30-65 mass % of at least one thermoplastic polyester polymer and
b) 0-15 mass % other polymers, not containing a halogen containing polymer,
(B) a flame retardant system consisting of
c) 35-50 mass % melamine cyanurate, and
d) 0-3 mass % of an inorganic flame retardant synergist not comprising phosphorous, and
(C) 0-10 mass % other additives, not comprising fibrous reinforcing agents, and wherein the sum of components (A)-(C) totals 100 mass % and all the mass percentages are relative to the total mass of the composition.

12. Moulded part for use in electrical or electronic applications, comprising the polyester composition according to any one of claims 1-11.

## Patentansprüche

1. Halogenfreie flammgeschützte thermoplastische Formmasse, bestehend aus:
(A) einer Polymermasse, bestehend aus:
c) 30-67 Masse-% mindestens eines thermoplastischen Polyesterpolymers und
d) 0-15 Masse-% anderer Polymere, davon 0-0,3 Masse-% eines Fluorpolymers,
(B) einem Flammschutzmittelsystem, bestehend aus
a) 33-55 Masse-% Melamincyanurat,
b) 0 bis weniger als 2 Masse-% eines phosphorhaltigen Flammschutzmittels, das keinen elementaren Phosphor enthält, und
c) 0-5 Masse-% eines anorganischen Flammschutzmittelsynergisten, der keinen Phosphor enthält, und
(C) 0-10 Masse-% anderer Additive, davon 0-5 Masse-% faserförmige Verstärkungsmittel,
und in der sich die Summe der Komponenten (A)-(C) auf 100 Masse-% beläuft und alle Massenprozente sich auf die Gesamtmasse der Masse beziehen.

2. Masse nach Anspruch 1, in der es sich bei dem thermoplastischen Polyester um ein Poly(alkylenterephthalat) handelt.

3. Masse nach Anspruch 1 oder 2, in der die Polymermasse aus Poly(butylenterephthalat) oder Poly-(ethylenterephthalat) oder einer Mischung oder einem Copolymer davon besteht und es sich vorzugsweise um Poly(butylenterephthalat) handelt.

4. Masse nach einem der Ansprüche 1-3, die weitgehend frei von Fluorpolymeren ist.

5. Masse nach einem der Ansprüche 1-4, in der es sich bei dem anderen Polymer (A-b) um einen kautschukartigen Schlagzähigkeitsmodifikator handelt.

6. Masse nach einem der Ansprüche 1-5, die 37-45 Masse-% Melamincyanurat, bezogen auf die Gesamtmasse der Masse, enthält.

7. Masse nach einem der Ansprüche 1-6, in der das Flammschutzmittelsystem weniger als 1 Masse-%, bezogen auf die Gesamtsumme der Komponenten (A)-(C), des phosphorhaltigen Flammschutzmittels (B-b) enthält.

8. Masse nach einem der Ansprüche 1-7, in der Melamincyanurat das einzige Flammschutzadditiv ist.

9. Masse nach einem der Ansprüche 1-8, die frei von faserförmigen Verstärkungsmitteln ist.

10. Masse nach einem der Ansprüche 1-9, die einen P-Gehalt von weniger als 0,25 Masse-%, bezogen auf die Gesamtmasse der Formmasse, aufweist.

11. Masse nach einem der Ansprüche 1-10, bestehend aus:
(B) einer Polymermasse, bestehend aus:
a) 30-65 Masse-% mindestens eines thermoplastischen Polyesterpolymers und
b) 0-15 Masse-% anderer Polymere, die kein halogenhaltiges Polymer enthalten,
(B) einem Flammschutzmittelsystem, bestehend aus
c) 35-50 Masse-% Melamincyanurat und
d) 0-3 Masse-% eines anorganischen Flammschutzmittelsynergisten, der keinen Phosphor enthält, und
(C) 0-10 Masse-% anderer Additive, die keine faserförmigen Verstärkungsmittel umfassen,
und in der sich die Summe der Komponenten (A)-(C) auf 100 Masse-% beläuft und alle Massenprozente sich auf die Gesamtmasse der Masse beziehen.

12. Formteil zur Verwendung bei elektrischen oder elektronischen Anwendungen, umfassend die Polyestermasse gemäß einem der Ansprüche 1 bis 11.

## Revendications

1. Composition de moulage thermoplastique ininflammable exempte d'halogène, constituée de :
(A) une composition polymère constituée de
a) un pourcentage massique de 30-67 % d'au moins un polymère de polyester thermoplastique, et
b) un pourcentage massique de 0-15 % d'autres polymères, dont un pourcentage massique de 0-0,3 % d'un polymère fluoré,
(B) un système ignifugeant constitué de
a) un pourcentage massique de 33-55 % de cyanurate de mélamine,
b) un pourcentage massique de 0 à moins de 2 % d'un agent ignifuge contenant le phosphore ne comprenant pas de phosphore élémentaire, et
c) un pourcentage massique de 0-5 % d'un synergiste ignifugeant inorganique ne comprenant pas de phosphore, et
(C) un pourcentage massique de 0-10 % d'autres additifs, dont un pourcentage massique de 0-5 % d'agents de renforcement fibreux,
et dans laquelle la somme des composants (A)-(C) représente au total un pourcentage massique de 100 % et tous les pourcentages massiques sont exprimés relativement à la masse totale de la composition.

2. Composition selon la revendication 1, dans laquelle le polyester thermoplastique est un poly(téréphtalate d'alkylène).

3. Composition selon la revendication 1 ou 2, dans laquelle la composition polymère est constituée de poly(téréphtalate de butylène) ou de poly(téréphtalate d'éthylène), ou d'un mélange ou d'un copolymère de ceux-ci, préférablement constituée de poly(téréphtalate de butylène).

4. Composition selon l'une quelconque des revendications 1-3, dans laquelle la composition est fondamentalement exempte de polymères fluorés.

5. Composition selon l'une quelconque des revendications 1-4, dans laquelle l'autre polymère (A-b) est un modificateur de résistance aux chocs caoutchouteux.

6. Composition selon l'une quelconque des revendications 1-5, dans laquelle la composition comprend un pourcentage massique de 37-45 % de cyanurate de mélamine, relativement à la masse totale de la composition.

7. Composition selon l'une quelconque des revendications 1-6, dans laquelle le système ignifugeant contient un pourcentage massique inférieur à 1 %, relativement au total de la somme des composants (A)-(C), de l'agent ignifuge contenant le phosphore (B-b).

8. Composition selon l'une quelconque des revendications 1-7, dans laquelle le cyanurate de mélamine est le seul additif ignifuge.

9. Composition selon l'une quelconque des revendications 1-8, dans laquelle la composition est exempte d'agents de renforcement fibreux.

10. Composition selon l'une quelconque des revendications 1-9, dans laquelle la composition a une teneur en phosphore inférieure à un pourcentage massique de 0,25 % relativement à la masse totale de la composition de moulage.

11. Composition selon l'une quelconque des revendications 1-10, dans laquelle la composition est constituée de :
(A) une composition polymère constituée de
a) un pourcentage massique de 30-65 % d'au moins un polymère de polyester thermoplastique, et
b) un pourcentage massique de 0-15 % d'autres polymères, ne contenant pas de polymère contenant un halogène,
(B) un système ignifugeant constitué de
a) un pourcentage massique de 35-50 % de cyanurate de mélamine, et
b) un pourcentage massique de 0-3 % d'un synergiste ignifugeant inorganique ne comprenant pas de phosphore, et
(C) un pourcentage massique de 0-10 % d'autres additifs, ne comprenant pas d'agents de renforcement fibreux,
et dans laquelle la somme des composants (A)-(C) représente au total un pourcentage massique de 100 % et tous les pourcentages massiques sont exprimés relativement à la masse totale de la composition.

12. Pièce moulée destinée à une utilisation dans des applications électriques ou électroniques, comprenant la composition de polyester selon l'une quelconque des revendications 1-11.
